# EUROPEAN PATENT SPECIFICATION

(11) **EP 3 601 864 B1**
(45) Date of publication and mention of the grant of the patent: **08.12.2021**
(21) Application number: 18772383.8
(22) Date of filing: 20.03.2018
(51) Int. Cl.: F16L 17/00, F16L 37/00, F16L 19/06, F16L 21/00, F16L 21/08, F16L 37/14, F16L 37/15, E03F 3/04

(54) **POSITIVE LOCK SYSTEM FOR RESTRAINED JOINTS OF DUCTILE IRON SPUN PIPES AND FITTINGS**
FORMSCHLÜSSIGES SYSTEM FÜR ZUGFESTE VERBINDUNGEN VON GESPONNENEN KUGELGRAPHITROHREN UND -FORMSTÜCKEN
SYSTÈME DE VERROUILLAGE POSITIF POUR JOINTS RETENUS DE TUYAUX CENTRIFUGÉS ET DE RACCORDS FILETÉS EN FONTE DUCTILE

(30) Priority: 21.03.2017 IN 201711009888
(43) Date of publication of application: 05.02.2020
(73) Proprietor: Jindal Saw Ltd, New Delhi 110066 (IN)
(72) Inventor: SHRIVASTAVA, Anurag, Gurgaon Haryana (IN); RAJASEKARAN, V., Gujarat 370415 (IN); BOSE, Partha, Gujarat 370415 (IN); SUBRAMONIAN, K., Gujarat 370415 (IN)
(74) Representative: Studio Torta S.p.A.
(86) International application number: PCT/IB2018/051843
(87) International publication number: WO 2018/172922

(56) References cited:
- EP-A1- 2 713 089
- EP-A2- 1 460 325
- EP-B1- 0 455 490
- OA-A- 4 282

## Description

### Field of the invention:

The present invention relates to positive lock jointing system for ductile iron spun pipe and fittings. More particularly the invention relates to positive lock system for restrained joints of ductile iron spun pipes and fittings and its assembling process thereof.

### Background of the invention:

Ductile iron spun pipes are being used for distribution of drinking and sewerage water since late 1950s. This type of pipe is a direct development of earlier cast iron pipe because of its better structural properties and various other features.

Ductile iron pipes are manufactured by centrifugal casting of molten metal. Several types of rubber-gasket joints are available with ductile-iron pipe and fittings to accommodate a wide variety of applications. In addition to the flanged joints following two type of joints are possible:
a. Push-on joint,
b. Restrained Joints

Most widely used joint is normal-push-on joint. Ductile iron pipes comprise of socket and spigot ends. The inside surface of the socket has grooves to hold the rubber gasket. The gasket has a hard part called the 'heel' which gets engaged in the groove of the socket to firmly hold the gasket. The other part of the gasket is the bulb portion which is comparatively softer than the heel portion of the gasket. Both softer bulb and the harder heel portions of the gaskets are vulcanized to form a circular single part. The spigot of the next pipe will have a taper portion to facilitate smooth insertion of the spigot end in to the socket of the pipes. The spigot is inserted into the socket holding the rubber gasket. The spigot exerts uniform circumferential pressure over the soft portion of the rubber gasket and the pipe is pushed in to the socket until one line of the insertion mark gets into the socket and the other insertion mark is visible.

The internal hydrostatic pressure acts perpendicularly on any plane with a force equal to the pressure times the area of the plane. All components of these forces acting radially within a pipe are balanced by circumferential tension in the wall of the pipe. Axial components acting on a plane perpendicular to the pipe through a straight section of the pipe are balanced internally by the force acting on each side of the plane.

However, in the case of a bend, the forces acting axially along each leg of the bend are not balanced. The vector sum of these forces is the thrust force. To prevent separation of the joints, a reaction equal to and in the opposite direction of thrust force must be established.

Conventional ductile iron pipe joints are push-on type joints. These joints do not offer any significant resistance to joint separation.

The unbalanced thrust forces are generated in following conditions:-
- Change in directions
- Thrust at Bends - Horizontal/Vertical
- Thrust at a Tee of Wye
- Thrust at a Reducer
- Thrust at a Dead End or Valve.

There are two ways to take care the unbalancing above thrust load:
a) Using thrust block/ concrete block;
b) Using restrained pipe.

Thrust Block is one of the most common methods of providing resistance to thrust forces is the use of thrust blocks. Resistance is provided by transferring the thrust force to the soil through the larger bearing area of the block such that the resultant pressure against the soil does not exceed the bearing strength of the soil. Design of thrust blocks consists of determining the appropriate bearing area of the block for a particular set of conditions.

An alternative method of providing thrust restraint is the use of restrained joints. A restrained joint is a special type of push-on joint that is designed to provide longitudinal restraint. Restrained-joint systems function in a manner similar to thrust blocks, insofar as the reaction of the entire restrained unit of piping with the soil balances the thrust forces.

Thus, alternate to above concrete thrust block concepts is to use restrained pipe solutions like mechanical bolted restrained joint with gland and tensioning ring, K-type joint etc. However, the existing restrained joints are having limitations in terms of ease and speed of assembly, requirement of huge number of components, pressure rating of the joint.

Therefore, there is need of technically advanced restrained jointing system in ductile iron pipe jointing which can decrease the assembly timing and difficulties as well widen the scope of ductile iron pipe applications areas.

EP-A2-1460325 and EP-A1-2713089 disclose two examples of positive lock systems for restrained joints of ductile iron spun pipes and fittings.

### Object of the invention

In order to obviate the drawbacks of the prior art, the present invention aims to provide lock jointing system for ductile iron spun pipe and fittings.

Further object of the present invention is to provide a positive lock system for restrained joints of ductile iron spun pipes and fittings.

Further object of the present invention is to provide a positive lock system for restrained joints of ductile iron spun pipes and fittings, which are easy to assemble and can be used in restrained conditions.

Further object of the present invention is to a process of assembling positive lock system for restrained joints of ductile iron spun pipes and fittings.

### Summary of the Invention:

The invention is a positive lock system for restrained joints of ductile iron spun pipes and fittings according to claim 1. In order to obviate the drawbacks of the prior art and achieve the afore-said objectives the present invention a novel positive lock system for restrained joints of ductile iron spun pipes.

The positive locked joint between two ductile iron pipes is obtained by inserting the plain end of one pipe into the bell end of the other pipe. Positive locking is obtained by inserting series of lock segments in between the weld bead available on plain end and circumferential chamber of the bell socket of other pipe. The joint comprises of a
a. Bell shape socket 1 of a pipe made of ductile iron,
b. Plain end 2 of another pipe made of ductile iron,
c. Radially compressed elastomer gasket 5 inserted between the outer peripheries of plain end and inner peripheries 7 of socket 1
d. Weld bead 4 which is made on plain end of pipe at suitable location and
e. Series of lock segments 3, inserted through the cutout window 8 and rotated in between the weld bead and circumferentially protruded downwards chamber 6.

The new pipe is having one additional chamber to conventional ductile iron pipe socket. This chamber acts as 'locking chamber'. A weld bead is made on the spigot of the pipe. In assembly the total thrust load produced in the pipe line is transferred to the locking chamber of the socket from weld bead through specially designed ductile iron lock segments. The chamber is designed in such a way as to absorb all the axial loads generated by the internal pressure or the pulling forces, therefore the desired angular deflections can be achieved. In this manner all the thrust load are converted to axial load which is shared by series of pipes along the subject joint and finally transferred to its surrounding external soil/earth by its bearing resistance.

The complete assembly form the self-restraining joint, thus eliminating the need for thrust blocks. Apart from above the invention permits the use of such pipe joints in trenchless method of pipeline laying by horizontal drilling of bore and pulling of pipelines due to its capacity to sustain very high traction forces. These invented Ductile iron pipes with a positive lock jointing system are quick to assemble and well suited to be used in seismic zones, fault crossings, liquefaction zones, and connections to structures, floating pipelines, across river sea or water bodies, laying on steep slopes, mine dewatering and tailings pipelines without thrust blocks or external restraining requirements, snow making application.

The positive locking system can be prepared in various size ranges from DN100 to DN1800 as per EN545/ISO10804-1 with a suitable range of fittings. However, the construction of the socket locking chamber varies as per size with respect to pressure rating design traction forces.

The new positive locking system has widen the scope for ductile iron pipe application thus proved to be an advanced restrained jointing system.

### Detailed description of the drawings:

The foregoing and further objects, features and advantages of the present subject matter will become apparent from the following description of exemplary embodiments with reference to the accompanying drawings, wherein like numerals are used to represent like elements.

It is to be noted, however, that the appended drawings illustrate only typical embodiments of the present subject matter, and are therefore, not to be considered for limiting of the scope of the present invention as defined in the appended set of claims, for the subject matter may admit to other equally effective embodiments.

For a fuller understanding of the nature and object of the present invention, reference is made to the accompanying drawings, wherein:

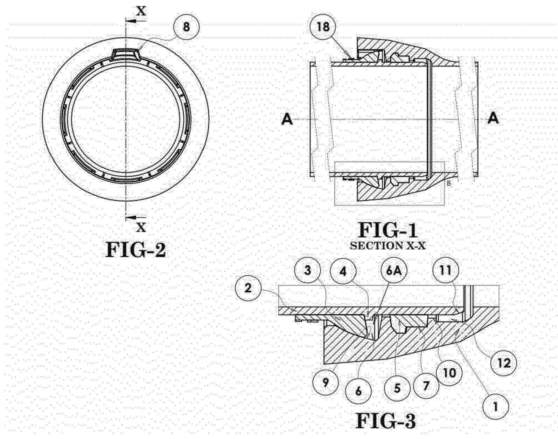

**Figure 1** illustrates longitudinal section of the joint on axis A-A in accordance with an embodiment of the present invention.
**Figure 2** illustrates front face view of the assembly in accordance with an embodiment of the present invention.
**Figure 3** illustrates detailed view of the assembly parts in aligned position of both pipes in accordance with an embodiment of the present invention.

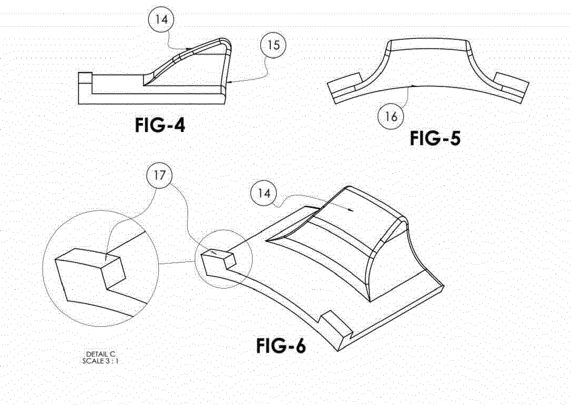

**Figure 4** illustrates side view of lock segment showing protruded block for locking in accordance with an embodiment of the present invention.
**Figure 5** illustrates front face of the lock segment in accordance with an embodiment of the present invention.
**Figure 6** illustrates isometric view of Lock segment in accordance with an embodiment of the present invention.

### Detailed description of the invention:

The following presents a detailed description of various embodiments of the present invention with reference to the accompanying drawings.

The embodiments of the present invention are described in detail with reference to the accompanying drawings. However, the present invention is not limited to these embodiments which are only provided to explain more clearly the present subject matter to a person skilled in the art of the present disclosure. In the accompanying drawings, like reference numerals are used to indicate like components.

The present invention described herein relates to a restrained semi flexible joint for ductile iron pipes. It is a self-restrained, semi-flexible jointing system of socket and spigot pipe. The joint can be deflected up to the designed angle as a function of the size range. Water or other fluids passing through the pipeline exert an internal pressure on the walls of the pipe barrel and the same force is transferred to the adjacent pipe. Said locking system helps in transferring the thrust forces generated to the next pipe through a welded bead shaped on the spigot of each pipe via lock segments. The complete jointing assembly forms the self-restraining joint, thus eliminating the need for thrust blocks, and facilitates trenchless laying of ductile iron pipelines. Ductile iron pipes with the present jointing system are quick to assemble and well suited to be used in seismic zones, fault crossings, liquefaction zones, and connections to structures, floating pipelines, hydro power plants, laying on steep slopes, firefighting water mains, and mine dewatering pipelines without thrust blocks or external restraining requirements.

According to an embodiment of the present invention, locking is achieved between the pipe socket and the weld bead, made on the other pipe spigot, with the help of specially manufactured locks. The chamber is designed in such a way as to absorb all the axial loads generated by the internal pressure or the pulling forces, therefore the desired angular deflections can be achieved.
According to an embodiment of the present invention, the ductile iron pipes are designed in such a way that individual pipes are connected using the lock system to form one complete system without need of welding, screwing, testing, surface treatment or without having problem of loosening.
According to conventional design, the ductile iron pipes are supplied to suit and facilitate restrained jointing in which the axial Movement of the pipe is arrested by mechanical means. The ductile iron pipes with these joints are ideally suitable for the pipe line to be laid over loose soil or marshy land where one cannot provide anchor blocks at Tee points, or bends etc. This joint comprises an assembly two pipes of socket and spigot type with glands, split ring, and a set of hook bolts, nuts, and washers. The spigot end of the pipe is to be provided with a weld bead. The socket of the pipe to be joined will have a circumferential projected collar.
In accordance with an embodiment, present invention relates to novel positive lock system for restrained joints of ductile iron pipes and ductile iron fittings which are able to take all the thrust loads produced due to transmitting fluids pressure and provide certain angular deflections to the axis of two pipes. Each ductile iron pipe suitable for this type of joint is provided with a bell shape socket 1 and a plain ended spigot **2**. Normally plain ended spigot **2** is pushed in pipe socket **1** to do the jointing of two pipes. An elastomeric/rubber gasket **5** is placed in a gasket chamber **7** provided in bell socket **1**. The inner diameter of the gasket **5** is less than the plain end **2** outer diameter. So during assembly the plain end **2** of a pipe compresses the gasket **5** radially to make the joint water tight. For the positive locking joint a weld bead **4** is made on the circumferential periphery of the plain end **2** of the pipe. A series of lock segments **3** are inserted in the circumferential chamber **6**. The lock segments **3** are always staying between the weld bead **4** and the circumferential chamber **6** inner surface **9**. The lock segment **3** is designed in such a way that it has a front face **15** at a suitable angle to dissipate all the axial forces in required direction and a rear circular face **14** so that it can match to the socket chamber face **9** to have smooth sliding during axial angular deflection at the joint. The radius and center of the circumferential face **9** and **14** is calculated so that the maximum axial forces can be transferred to pipe socket **1** at the required angular deflection of two axis. As per invention the thrust loads generated due to transmitting fluid pressure should be transferred from weld bead **4** to the lock segment **3** and from lock segment **3** to the circumferential chamber **6** of the socket **1**.
In accordance with another embodiment, the positive locked joint between two ductile iron pipes as shown in FIG-1 is similar to the type of joint explained in US3684320 and other referred patent are EP1460325A2, US6062611, US28883899, US7806445B2 except the structure of the lock segment 3, center and radius of the circular face 14 of lock segment and **9** of pipe socket **1**.
In accordance with another embodiment, as shown in FIG -3, the joint comprises of a bell shape socket **1** of a pipe, a plain end **2** of another pipe, radially compressed elastomer gasket **5** between the outer peripheries of plain end **2** and inner peripheries of socket **1**, a weld bead **4** which is made on plain end **2** of pipe at suitable location and series of lock segments **3** inserted through the cutout window **8** shown in FIG-2 and rotated in between the weld bead **4** and circumferentially protruded downwards chamber **6**. Lock segment **3** always remain on the outer periphery of the plain end **2** of the pipe. The radius of the face **16** in FIG-5 of lock segment **3** should be equal or under required limits to the outer radius of the plain end **2** periphery. Both the plain end **2** and bell shape socket **1** are made of ductile iron. The lock segment **3** are casted from ductile iron as well. The joint is water sealed with the help of elastomer gasket **5** by it compressible property. The inner diameter of the gasket **5** is less than the outer diameter of the plain end **2** of the pipe to be inserted in the gasket **5**. So after insertion the gasket **5** got compressed between the plain end **2** of one pipe and the gasket chamber **7** of the socket **2** of other pipe.
During water or other fluid transmission the pressure inside the pipe body increases. It leads to generation of circumferential loads and axial loads. Circumferential loads are taken care by the pipe body itself. Due to axial loads the joint tends to dismantle itself. The axial load produced due to water pressure transmits to the plain end **2** of the pipe. In positive locking joint the axial load from plain end **2** is perceptible in weld bead **4** as it is bonded to the former. This axial load produced is transmitted to the lock segment **3** from weld bead **4** as both have a face contact with each other. The face **15** in FIG-4 of the lock segment **3** is in contact with the weld bead **4**. The inclination the lock segment **3** face **15** is designed in such a way the axial load can be transmitter in required direction towards rear circular face **14** of the lock segment **3**. Axial load transmitted to lock segment **3** from weld bead 4 is then transmitted to the socket **1** if the pipe. This load is transmitted through rear face **14** of the lock segment **3** to radial face **9** of circumferential chamber **6** socket **1**. Socket **1** of pipe is to be designed in such a way that it should be able to take all the axial force transmitted to it whether it is due to working pressure of transported fluid, loads due to surge etc.

Both the face **14** and **9** should have same radii for better match and smooth sliding during the joint axial deflection and load transmission at the same time. The clearance is provided between front face **15** of the lock segment and chamber **6** starting position to facilitate the angular deflection of the joint. The width of the face **14** of the lock segment **3** is calculated to have maximum contact during the highest angular deflection of the joint so that maximum axial loads can be transmitted. The height of the protruded block and face **14** of lock segment **3** is calculated so that it may be sufficient to transmit the loads in required direction and minimum magnitude. A proper combination of height and width of the face **14** results to optimize the axial loads transmission to the pipe socket **1** and reactions of these loads to plain end **2** of the pipe so that pipe can be produced with optimum body thickness.

Chamber **12** is provided to have clearance of the plain end **2** of pipe and chamber **11** with the socket **1** inner wall.

Ring **10** will act like a mechanical stopper to the higher angular deflections than recommended. According to the invention, the series of lock segments **3** as a part of joint always remain on the outer periphery of the plain end **2** of the pipe with the help of tying belt **18**. The radius of the bottom face **16** of the lock segment **3** is kept equal or under required limits to the outer radius of the plain end periphery. Lock segments **3** are provided with end stoppers **17** (FIG-6) projected outwards to give housing for tying belt and help in lock rotation during assembly. Lock segments **3** are provided with rear spherical face **14** with highest sphere diameter to get maximum tangential angle. Highest spherical diameter of the rear spherical face **14** of lock segment **3** as part of the joint assembly leads to higher axial load absorption capacity of socket. Lock segments are provided with front face **15** which is at some inclination with the horizontal to direct the axial loads in required direction.

Socket is having clearance **6A** between the lock face **15** and chamber **6** end face to give enough room for the lock segment during angular deflection of the joint. Each lock segment is a sector of certain angle in circular ring with protruded projection designed in such a way that uniform load distribution achieved on socket circumferential chamber **6** and can be rotated freely during assembly.

Bell shape socket **1** is provided with ring **10,** which work as mechanical stopper to limit the angular deflection at maximum allowed and work as a design safety feature at higher fluid pressures. The diameters are selected as such to achieve the maximum allowable angular deflection in any case.

A procedure for assembly installation of the positive lock system for restrained joints of ductile iron spun pipes and fittings involves following steps:
**1. Socket preparation:** Keeping the lock insertion chamber on the top side to facilitate the easy insertion of locks. Cleaning the socket internal grooves such as gasket seating groove, lock retaining chamber, etc. Removing all the dust and foreign particles. Fixing the gasket by lubricating the gasket groove with suitable lubricant. For this purpose, carefully wipe a thin film of lubricant supplied with the pipes by the manufacturer over the sealing groove surface. A loop is made in the gasket and said gasket is fixed into the socket so that the hard-rubber claw on the outside engages in the retaining groove in the socket. The lower part is first inserted in the retaining chamber of the gasket groove and then unlooping the heart shaper part to fix it into the gasket seating groove. Ram the gasket softly to fix the gasket in groove properly. Once the gasket is proper seated, a thin layer of lubricant is applied on the top face of the gasket.
**2. Preparation of spigot:** Cleaning the surface of spigot end with soft wire brush/ paint brush. Putting thin layer of lubricant on the spigot end of the pipe with weld bead particularly at the chamfer / bevel area just before assembly.
**3. Assembly of the joint:** once the spigot is ready, it seated in the socket. The pipes must not be at an angular deflection when being pulled in and till the lock segments are being fitted. Inserting the lock segments one by one through the window provided in the socket face and distributing them along the circumference of the pipe, working alternately left and right. Then moving all the segments round in one direction until the last segment can be inserted through the openings in the end-face of the socket and can be moved to a position where it provides secure locking. Only a small part of the humps on the last locking segment should be visible through the opening in the end-face of the socket. Should any segments jam, they should be moved to their intended position by gentle taps with a hammer by moving the pipe as it hangs on the sling.
**4. Locking:** all the lock segments are pulled back in the outward direction until they are in contact and pressed against the slope of the retaining chamber. Cable ties / nylon strap are clamped around outside periphery of lock segments as shown in the image and tightened sufficiently far enough to still allow the lock segments to be moved. Lock segments are lined up such that they are resting against the barrel of the pipe over their full circumference area without overlapping. One end of pipe is pulled (axially) towards the side under laying such that weld bead comes into contact with all lock segments. Ensuring that all lock segments are in line uniformly and tighten the clamping strap until the lock segments are bearing firmly against the pipe around the whole of its circumference. Now, further movement of the locking segments should not be possible. When the pipe is in an un-deflected state, all the lock segments should be approximately same longitudinal distance away from the socket face. Once the joint is fully assembled in aligned condition, pull the spigot outwards to maximum and set the angular deflection according to the requirement.
**5. Disassembly:** Ensure the assembly to be in aligned condition before disassembly. After aligned condition push the pipe into the socket along its axis until it is in abutment and remove the lock segments through the opening in the socket face. Remove all lock segments one by one and joints shall be disassembled with the help of tools and tackles.

### Advantages over existing Restrained Joint:

**1.** High pressure ratings can be achieved, thus making this product to be used for high pressure lines without thrust blocks constructions.
**2.** Low assembly time: - The new designed joint can be assembled in 20-30 minutes (for average DN 1000 size) whereas the conventional restrained joint take 120-180 minutes for the assembly, thus enhancing speed of pipeline laying.
**3.** Less number of assembly parts: - The newly designed joint assembly is having much less number of assembly parts. Thus making the assembly process more efficient and convenient.
**4.** The higher permissible angular deflection of the invented joint design reduces the number of fittings requirements for the same pipeline. The combination of invented positive lock system for restrained joint DI Pipes with same joint fittings make entire pipeline system highly flexible and convenient in design as well laying.
**5.** Wider Area of Application: - New joint has widen the scope of application of restrained DI pipes. Due to positive locking system in DI pipes, these pipes can be laid by dragging techniques, such as Horizontal Directional Drilling, Floating pipe lines on through water bodies and laying pipes by dragging technique. Conventional restrained pipes or standard push on joint di pipes cannot be laid by these methods.
**6.** The invented product significantly reduces total cost of complete pipeline.

### Areas of Application:-

**1.** Ductile iron pipe lines without thrust blocks.
**2.** High pressure applications.
**3.** Pipe lines on steep slopes.
**4.** Trenchless Ductile Iron pipe lines.
**5.** Bridge pipelines.
**6.** Snow making pipelines.
**7.** Firefighting mains.
**8.** Laying by horizontal directional drilling.
**9.** Floating Pipelines in marshy area / river or water bodies.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the scope of the present invention as defined in the appended set of claims.

## Claims

1. A positive lock system for restrained joints of ductile iron spun pipes and fittings comprising:
• a bell shape socket (1) and a plain ended spigot (2) provided on ductile iron pipes such that the plain ended spigot (2) is pushed in said bell shape socket (1) to do the jointing of two pipes;
• an elastomeric/rubber gasket (5) placed in a gasket chamber (7) provided in said bell shape socket (1);
• a weld bead (4) provided on the circumferential periphery of the plain ended spigot (2);
• a series of lock segments (3) inserted through a cutout window (8) provided in the bell shape socket and rotated in between the weld bead (4) and the inner surface (9) of a circumferential chamber (6) of said bell shape socket (1); wherein said inner surface (9) is circumferential;
• a chamber (12), said chamber providing clearance between the plain ended spigot (2) within said chamber (12) and the bell shape socket (1) inner wall; and
wherein the inner diameter of the gasket (5) is less than the plain ended spigot (2) outer diameter to enable plain ended spigot (2) to compress the gasket (5) radially to make the joint water tight;
wherein the bell shape socket (1) is further provided with a ring (10), to act as mechanical stopper to limit the angular deflection at maximum allowed and work as a design safety feature at higher fluid pressures.
wherein said lock segments (3) have a front face (15) at a suitable angle to dissipate all the axial forces in required direction and a rear face (14), which is circular/spherical, to match to the inner surface (9) of the circumferential chamber (6) for smooth sliding during axial angular deflection at the joint; said required direction being directed from front face (15) towards rear face (14); wherein the radius and center of the inner surface (9) and rear face (14) is calculated such that the maximum axial forces can be transferred to said bell shape socket (1) at the required angular deflection of two axis; and
wherein the thrust loads generated due to transmitting fluid pressure is transferred from the weld bead (4) to the lock segment (3) and from the lock segment (3) to the circumferential chamber (6) of the bell shape socket (1); **characterized in that** it moreover comprises a tying belt (18),
**in that** the series of lock segments (3) remains on the outer periphery of the plain ended spigot (2) with the help of the tying belt (18);
and **in that** the lock segments (3) are provided with end stoppers (17) projected outwards to give housing for the tying belt (18) and facilitate lock rotation during assembly.

2. The positive lock system as claimed in claim 1, wherein the lock segment (3) is arranged on the outer periphery of the plain ended spigot (2).

3. The positive lock system as claimed in claim 1, wherein the radius of the bottom face (16) of lock segment (3) is equal to or under required limits to the outer radius of the plain ended spigot (2) periphery.

4. The positive lock system as claimed in claim 1, wherein both the rear face (14) and the inner surface (9) have same radii to enable better match and smooth sliding during the joint axial deflection and load transmission.

5. The positive lock system as claimed in claim 1, wherein a clearance (6A) is provided between front face (15) of the lock segment (3) and circumferential chamber (6) end face to facilitate the angular deflection of the joint.

6. The positive lock system as claimed in claim 1, wherein the height of the protruded block and rear face (14) of lock segment (3) is configured to transmit the loads in the required direction and minimum magnitude.

7. The positive lock system as claimed in claim 1, wherein the plain ended spigot (2), bell shape socket (1) and lock segments (3) are made of ductile iron.

## Patentansprüche

1. Formschlüssiges System für kraftschlüssige Verbindungen von duktilen Schleudergussrohren und Formstücken, umfassend:
- eine glockenförmige Muffe (1) und einen glattendigen Stutzen (2), die an duktilen Eisenrohren derart angeschlossen sind, dass der glattendige Stutzen (2) in die genannte glockenförmige Muffe (1) eingeschoben wird, um die Verbindung zwischen zwei Rohren herzustellen;
- eine Elastomer-/Gummidichtung (5), die in einer Dichtungskammer (7), die in der genannten glockenförmigen Muffe (1) vorgesehen ist, angeordnet ist;
- eine Schweißraupe (4), die auf dem äußeren Umfang des glattendigen Stutzens (2) vorgesehen ist;
- eine Reihe von Sperrsegmenten (3), die durch ein ausgeschnittenes Fenster (8), das in der glockenförmigen Muffe (1) vorgesehen ist, eingeführt und zwischen die Schweißraupe (4) und die innere Oberfläche (9) einer Umfangskammer (6) der genannten glockenförmigen Muffe (1) verdreht werden; wobei die genannte innere Oberfläche (9) umlaufend ist;
- eine Kammer (12), wobei die genannten Kammer einen Spalt zwischen dem glattendigen Stutzen (2) innerhalb der Kammer (12) und der Innenwand der glockenförmigen Muffe (1) herstellt; und
wobei der Innendurchmesser der Dichtung (5) kleiner als der Außendurchmesser des glattendigen Stutzens (2) ist, um zu ermöglichen, dass der glattendige Stutzen (2) die Dichtung (5) radial verpresst, um die Verbindung wasserdicht zu machen;
wobei die glockenförmige Muffe (1) ferner mit einem Ring (10) versehen ist, um als ein mechanischer Anschlag zu wirken, um die Winkelauslenkung auf ein maximal zulässiges Maß zu begrenzen und als ein Konstruktionssicherheitsmerkmal bei höheren Fluiddrücken zu wirken,
wobei die genannten Sperrsegmente (3) eine Frontfläche (15) in einem geeigneten Winkel aufweisen, um alle axialen Kräfte in eine erforderliche Richtung abzuleiten, und eine Rückfläche (14), die kreisförmig/sphärisch ist, um mit der Innenfläche (9) der Umfangskammer (6) für ein sanftes Gleiten während der axialen Winkelauslenkung an der Verbindung zusammenzupassen; wobei die erforderliche Richtung von der Frontfläche (15) in Richtung der Rückfläche (14) gerichtet ist; wobei der Radius und die Mitte der Innenfläche (9) und der Rückfläche (14) so berechnet ist, dass die maximalen Axialkräfte auf die genannte glockenförmige Muffe (1) bei der erforderlichen Winkelauslenkung von zwei Achsen übertragen werden können; und
wobei die Schubkräfte, die während der Übertragung des Fluiddruckes erzeugt werden, von der Schweißraupe (4) auf das Sperrsegment (3) und von dem Sperrsegment (3) auf die Umfangskammer (6) der glockenförmigen Muffe (1) übertragen werden;
**dadurch gekennzeichnet, dass** es ferner einen Bindegurt (18) umfasst, dass die Reihe von Sperrsegmenten (3) auf dem Außenumfang des glattendigen Stutzens (2) mit Hilfe des Bindegurts (18) verbleibt; und dass die Sperrsegmente (3) mit Endanschlägen (17) versehen sind, die nach außen vorstehen, um ein Gehäuse für den Bindegurt (18) zu bilden und um die Verriegelungsdrehung während des Zusammenbaus zu erleichtern.

2. Das formschlüssige System, wie im Anspruch 1 beansprucht, wobei das Sperrsegment (3) auf dem äußeren Umfang des glattendigen Stutzens (2) angeordnet ist.

3. Das formschlüssige System, wie im Anspruch 1 beansprucht, wobei der Radius der Bodenfläche (16) des Sperrsegments (3) gleich ist wie oder unter den erforderlichen Grenzen zu dem Außenradius des Umfangs des glattendigen Stutens (2) ist.

4. Das formschlüssige System, wie im Anspruch 1 beansprucht, wobei die Rückfläche (14) und die Innenfläche (9) dieselben Radien aufweisen, um eine bessere Anpassung und ein sanftes Gleiten während der gemeinsamen axialen Verformung und der Lastübertragung zu ermöglichen.

5. Das formschlüssige System, wie im Anspruch 1 beansprucht, wobei ein Spalt (6A) zwischen der Frontfläche (15) des Sperrsegments (3) und der Stirnseite der Umfangskammer (6) vorgesehen ist, um die Winkelauslenkung der Verbindung zu erleichtern.

6. Das formschlüssige System, wie im Anspruch 1 beansprucht, wobei die Höhe des vorstehenden Blocks und die Rückfläche (14) des Sperrsegments (3) so bemessen sind, dass die Lasten in der erforderlichen Richtung und mit minimaler Größe übertragen werden.

7. Das formschlüssige System, wie im Anspruch 1 beansprucht, wobei der glattendige Stutzen (2), die glockenförmige Muffe (1) und die Sperrsegmente (3) aus duktilem Eisen hergestellt sind.

## Revendications

1. Système de verrouillage positif pour des joints retenus de tuyaux et raccords filés en fonte ductile, comprenant :
• une emboîture femelle en forme de cloche (1) et un embout mâle à bouts plans (2) qui sont prévus sur des tuyaux en fonte ductile de telle sorte que l'embout mâle à bouts plans (2) soit poussé à l'intérieur de ladite emboîture femelle en forme de cloche (1) afin de réaliser la jointure de deux tuyaux ;
• une garniture d'étanchéité en élastomère/en caoutchouc (5) qui est placée à l'intérieur d'une chambre de garniture d'étanchéité (7) qui est prévue à l'intérieur de ladite emboîture femelle en forme de cloche (1) ;
• un cordon de soudure (4) qui est prévu sur la périphérie circonférentielle de l'embout mâle à bouts plans (2) ;
• une série de segments de verrouillage (3) qui sont insérés au travers d'une fenêtre découpée (8) qui est prévue dans l'emboîture femelle en forme de cloche et qui sont soumis à rotation entre le cordon de soudure (4) et la surface interne (9) d'une chambre circonférentielle (6) de ladite emboîture femelle en forme de cloche (1) ; dans lequel ladite surface interne (9) est circonférentielle ; et
• une chambre (12), ladite chambre assurant un jeu entre l'embout mâle à bouts plans (2) à l'intérieur de la chambre (12) et une paroi interne de l'emboîture femelle en forme de cloche (1) ; et
dans lequel le diamètre interne de la garniture d'étanchéité (5) est inférieur au diamètre externe de l'embout mâle à bouts plans (2) afin de permettre la compression, par l'embout mâle à bouts plans (2), de la garniture d'étanchéité (5) radialement pour rendre le joint étanche à l'eau ;
dans lequel l'emboîture femelle en forme de cloche (1) est en outre munie d'une bague (10) qui est destinée à jouer le rôle de moyen d'arrêt mécanique pour limiter la déviation angulaire à un maximum autorisé et qui fonctionne en tant que caractéristique de sûreté de conception à des pressions de fluide plus élevées ;
dans lequel lesdits segments de verrouillage (3) comportent une face avant (15) selon un angle approprié pour dissiper toutes les forces axiales dans une direction requise et une face arrière (14) qui est circulaire/sphérique et qui est telle qu'elle peut être adaptée par appariement avec la surface interne (9) de la chambre circonférentielle (6) pour un coulissement sans heurt pendant une déviation angulaire axiale au niveau du joint ; ladite direction requise étant dirigée depuis la face avant (15) en direction de la face arrière (14) ; dans lequel le rayon et le centre de la surface interne (9) et de la face arrière (14) sont calculés de telle sorte que les forces axiales maximum puissent être transférées à ladite emboîture femelle en forme de cloche (1) pour la déviation angulaire requise de deux axes ; et
dans lequel les charges de poussée qui sont générées du fait de la transmission de la pression de fluide sont transférées depuis le cordon de soudure (4) jusqu'au segment de verrouillage (3) et depuis le segment de verrouillage (3) jusqu'à la chambre circonférentielle (6) de l'emboîture femelle en forme de cloche (1) ;
**caractérisé en ce qu'**il comprend en outre une courroie de liaison (18), **en ce que** les segments de la série de segments de verrouillage (3) restent sur la périphérie externe de l'embout mâle à bouts plans (2) à l'aide de la courroie de liaison (18) ; et **en ce que** les segments de verrouillage (3) sont munis de moyens d'arrêt d'extrémité (17) qui font saillie vers l'extérieur pour assurer le logement de la courroie de liaison (18) et pour faciliter une rotation de verrouillage pendant l'assemblage.

2. Système de verrouillage positif tel que revendiqué selon la revendication 1, dans lequel le segment de verrouillage (3) est agencé sur la périphérie externe de l'embout mâle à bouts plans (2).

3. Système de verrouillage positif tel que revendiqué selon la revendication 1, dans lequel le rayon de la face de fond (16) du segment de verrouillage (3) est égal au rayon externe de la périphérie de l'embout mâle à bouts plans (2) ou est en dessous de limites requises par rapport à ce même rayon externe.

4. Système de verrouillage positif tel que revendiqué selon la revendication 1, dans lequel la face arrière (14) et la surface interne (9) présentent toutes deux les mêmes rayons afin de permettre une meilleure adaptation par appariement et un meilleur coulissement sans heurt pendant la déviation axiale du joint et la transmission des charges.

5. Système de verrouillage positif tel que revendiqué selon la revendication 1, dans lequel un jeu (6A) est prévu entre la face avant (15) du segment de verrouillage (3) et une face d'extrémité de la chambre circonférentielle (6) afin de faciliter la déviation angulaire du joint.

6. Système de verrouillage positif tel que revendiqué selon la revendication 1, dans lequel la hauteur des moyens d'arrêt/de blocage en saillie et de la face arrière (14) du segment de verrouillage (3) est configurée pour assurer la transmission des charges dans la direction requise et selon une amplitude minimum.

7. Système de verrouillage positif tel que revendiqué selon la revendication 1, dans lequel l'embout mâle à bouts plans (2), l'emboîture femelle en forme de cloche (1) et les segments de verrouillage (3) sont réalisés en fonte ductile.
